(19) Europäisches Patentamt / European Patent Office / Office européen des brevets

(11) **EP 2 402 109 A2**

(12) **EUROPEAN PATENT APPLICATION**

(43) Date of publication:
**04.01.2012 Bulletin 2012/01**

(51) Int Cl.:
**B23K 11/11** (2006.01)

(21) Application number: **11171631.2**

(22) Date of filing: **28.06.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **30.06.2010 JP 2010148575**

(71) Applicant: **Kabushiki Kaisha Yaskawa Denki Kitakyushu-shi, Fukuoka 806-0004 (JP)**

(72) Inventors:
• **Nakanishi, Mitsuaki Kitakyushu-Shi, Fukuoka 806-0004 (JP)**
• **Wada, Makoto Kitakyushu-Shi, Fukuoka 806-0004 (JP)**

(74) Representative: **Gendron, Vincent Christian et al S.A. Fedit-Loriot 38, avenue Hoche 75008 Paris (FR)**

(54) **Robot system**

(57) For teaching a welding-point position for a robot (1), processing of a robot system includes first processing for moving a spot welding gun (2) to a position at which movable and fixed electrodes (21,22) pinch the welding point; second processing for extending the movable electrode toward a member to be welded by driving of a motor, detecting contact between the movable electrode and the member based on a torque command to the motor, and stopping the movable electrode after the contact is detected; and third processing for operating the robot toward the movable electrode to move the fixed electrode toward the member while maintaining the contact between the movable electrode and the member by the driving of the motor, detecting contact between the fixed electrode and the member based on a disturbance torque acting on a joint of the robot, and stopping the operation of the robot after the contact is detected.

**FIG.1**

EP 2 402 109 A2

**Description**

BACKGROUND OF THE INVENTION

Field of the Invention

The present invention relates to a robot system that performs predetermined work by using a robot, and more particularly relates to a robot system that performs spot welding.

Description of the Related Art

For spot welding in which a pair of electrodes pinch a plurality of stacked workpieces from both sides in a stacking direction and current is applied between the electrodes while a pressure is applied, a spot welding robot having a spot welding gun attached to a tip end of the robot has been known as related art. Spot welding work can be performed while the spot welding gun is moved successively to a plurality of welding points on the workpieces by operating the robot.
A widely used spot welding gun includes the pair of electrodes arranged opposite to each other and is configured such that one of the electrodes can be extended toward or contracted from the other electrode. Hereinafter, the electrode that can be extended or contracted is referred to as movable electrode, and the other electrode is referred to as fixed electrode.
When the spot welding is performed by the robot including such a spot welding gun, a series of operations is previously taught and the taught operations are played back during execution. Without limiting to the spot welding work, a robot typically has a teach mode for teaching a work program, and a play back mode for executing the work program.
During the teaching, an operator operates the robot to cause the fixed electrode and the movable electrode to contact a workpiece at a welding position, and the positions of the robot and movable electrode at this time are stored.
However, if a workpiece has a complex shape; a setup person has difficulty in checking the welding points during the teaching work. The teaching work for the robot may need a time and may be troublesome work. Also, if the robot is incorrectly operated, there may be a problem in which the electrodes collide with the workpiece, resulting in that the workpiece and the robot may be broken.
To address the problem, Japanese Patent No. 4233584 discloses a method relating to the teaching for the spot welding robot.
Japanese Patent No. 4233584 describes a process including monitoring a current value of a servo motor that drives a movable electrode tip while moving the movable electrode tip; assuming that a tip end of the movable electrode tip contacts a workpiece if the current value exceeds a predetermined value and stopping the movement of the movable electrode tip; measuring an opposite tip distance between the movable electrode tip and an opposite electrode tip; subtracting a set plate thickness of the workpiece from the opposite tip distance and obtaining a moving amount of the opposite electrode tip; and moving the opposite electrode tip toward the movable electrode tip from a standby position to a spot welding dot position by the moving amount and positioning the opposite electrode tip.

SUMMARY OF THE INVENTION

However, with the method described in Japanese Patent No. 4233584, the thickness (plate thickness) of the workpiece has to be previously set. The thicknesses of the workpiece have to be previously accurately measured for all welding points.
Also, in the method described in Japanese Patent No. 4233584, the contact between the movable electrode and the workpiece is detected by detecting a disturbance torque of the driving motor for the movable electrode, and a teach position is registered. Since the contact with respect to the workpiece is detected by pressing the work by the movable electrode, the workpiece may bend. The welding position in the bending state is taught, and hence there may be a problem in which welding quality is degraded.
Accordingly, an object of the present invention is to automatically correct a welding-point teach position of a spot welding robot while a bending amount of a workpiece is reduced even if a plate thickness is unknown, and hence to improve welding quality.
To address the above-described problems, the present invention is configured as follows.
According to one aspect of the present invention, a robot system includes an articulated robot including a spot welding gun having a fixed electrode, and a movable electrode that is arranged opposite to the fixed electrode and can be extended toward or contracted from the fixed electrode by driving of a motor. The robot system performs spot welding such that the articulated robot moves the spot welding gun to a predetermined welding point on a member to be welded, and that the fixed electrode and the movable electrode pinch the member to be welded in a thickness direction of the member to be welded. The robot system performs processing when the robot system teaches a position of the welding point for the robot. The processing includes first processing for moving the spot welding gun to a position at which the movable electrode and the fixed electrode pinch the welding point; second processing for extending the movable electrode toward the member to be welded by the driving of the motor, detecting contact between the movable electrode and the member to be welded based on a torque command to the motor, and stopping an operation of the movable electrode after the contact is detected; and third processing for operating the robot toward the movable electrode to move the fixed electrode toward the member to be welded while maintaining a state in which the movable electrode contacts the member to be welded by the driving of the motor, detecting contact between the fixed electrode and the member to be welded based on a disturbance torque that acts on a joint of the robot, and stopping the operation of the robot after the contact is detected.

In the above configuration, a position obtained by restoring the movable electrode by a predetermined compensation amount after the third processing is completed, and positions of respective joints of the robot obtained by operating the fixed electrode toward the movable electrode by the compensation amount may serve as teach positions for the welding point.

In the above configuration, the robot system may further include a portable teach device. When the position of the movable electrode is taught after the third processing is completed, a correction amount containing the predetermined compensation amount from the previous teach position of the movable electrode may be displayed on a display screen of the portable teach device.

In the above configuration, in the second processing, filtering processing with a high-pass filter may be performed and then filtering processing with a notch filter may be performed for the torque command to the motor, and the filtered torque command may be compared with a first predetermined threshold, to detect the contact between the movable electrode and the member to be welded.

In the above configuration, a notch frequency of the notch filter may be determined based on the number of poles and the number of slots of the motor.

In the above configuration, in the second processing, an extension amount of the movable electrode and the torque command to the motor after the filtering processing may be associated with each other and stored every predetermined period. Also, after the second processing is completed, the movable electrode may be restored by an amount calculated based on the stored extension amount and torque command.

In the above configuration, in the third processing, an estimated disturbance torque may be obtained by a disturbance observer from torque commands to motors of respective axes of the robot and speed detection values of the respective axes, processing with a high-pass filter may be performed for the estimated disturbance torque, and then coordinate transformation may be performed to estimate an external force that acts on the fixed electrode. Also, a value of the estimated external force may be compared with a second predetermined threshold to detect the contact between the fixed electrode and the member to be welded.

In the above configuration, after the second processing is completed, an extension amount of the movable electrode may be checked to detect an error of the member to be welded. Also, after the third processing is completed, an extension amount of the movable electrode may be checked to detect an error of the member to be welded.

With the aspect of the present invention, since the movable electrode of the spot welding gun and the respective axes of the robot are automatically operated, and the positions of the movable electrode and respective axes when the movable electrode and the fixed electrode actually apply the pressure to the workpiece are stored, the teaching can be made without previously setting the plate thickness of the workpiece. Even if the plate thickness is changed because, for example, a production line is changed, the teach point can be easily corrected.

Also, as compared with the related art, the teaching in the state, in which the bending amount of the workpiece due to the contact with respect to the movable electrode and the fixed electrode is reduced, can be made, and the spot welding can be properly performed. This makes a contribution to improvement for the welding quality.

Further, since the extension amount of the movable electrode is checked when the teaching is made; the error of the workpiece can be reliably detected.


BRIEF DESCRIPTION OF THE DRAWINGS

A more complete appreciation of the invention and many of the attendant advantages thereof will be readily obtained as the same becomes better understood by reference to the following detailed description when considered in connection with the accompanying drawings, wherein:

Fig. 1 is a schematic diagram showing a robot system according to an embodiment of the present invention;
Fig. 2 is a schematic diagram showing operation axes of a robot;
Fig. 3 is a schematic diagram showing coordinate systems of the robot;
Fig. 4 is a schematic diagram showing an inner configuration of a robot controller;
Figs. 5A to 5E illustrate a process for pressure operations by a spot welding gun;

Fig. 6 is a flowchart for teaching the position of a spot-welding point by the robot system according to the embodiment of the present invention;

Fig. 7 illustrates a process for detecting contact in a first pressure operation;

Fig. 8 illustrates a process for restoring a gun-axis after the detection of the contact in the first pressure operation;

Fig. 9 illustrates a process for detecting contact in a second pressure operation;

Fig. 10 illustrates a state in which external forces are estimated based on disturbance torques of basic-axes of the robot;

Fig. 11 illustrates a state in which external forces are estimated based on disturbance torques of wrist-axes of the robot;

Fig. 12A is a top view for explaining the definition of Tz, and Fig. 12B is a side view for explaining the definition of Tz;

Fig. 13 illustrates an example of a display screen for a teach pendant during correction of a teach position;

Fig. 14 is a flowchart during play back of an operation program; and

Figs. 15A and 15B each illustrate a state if a foreign substance is present on a workpiece.

## DESCRIPTION OF THE EMBODIMENTS

Embodiments will now be described with reference to the accompanying drawings, wherein like reference numerals designate corresponding or identical elements throughout the various drawings.

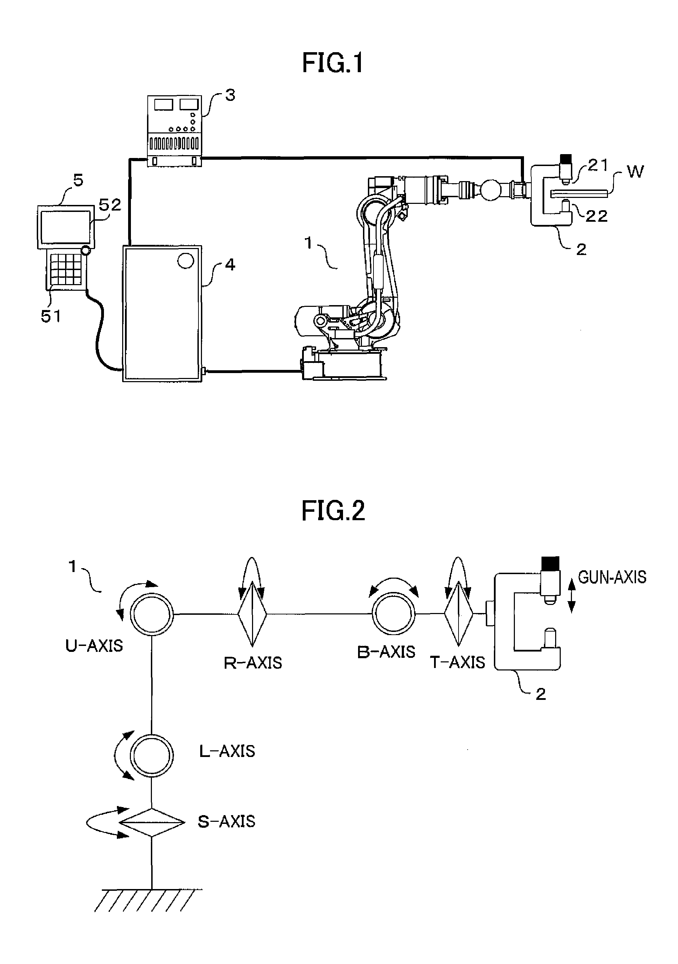

Fig. 1 schematically illustrates a configuration of a robot system according to this embodiment.

Referring to Fig. 1, a vertical articulated robot 1 has a plurality of joint-axes. A spot welding gun 2 is attached to a tip end of the robot 1.

The spot welding gun 2 includes a movable electrode 21 and a fixed electrode 22 that are arranged opposite to each other. In the illustrated example, two electrodes are vertically arranged, and the upper electrode is the movable electrode 21, and the lower electrode is the fixed electrode 22. When spot welding is performed, the movable electrode 21 is extended toward the fixed electrode 22 while a member to be welded (workpiece) W is arranged between the movable electrode 21 and the fixed electrode 22, the movable electrode 21 and the fixed electrode 22 pinch the workpiece W, and current is applied between the electrodes 21 and 22 for a predetermined time by electric power supplied from a welding power source 3.

When welding is completed, the movable electrode 21 is moved away from the fixed electrode 22 to release the workpiece W, and the spot welding gun 2 is moved to a next welding point by operating the robot 1.

A series of operations is previously taught as an operation program, and is stored in a robot controller 4. To execute actual work, an operator calls up a predetermined operation program from the robot controller 4 and causes the robot 1 to repeatedly execute the predetermined operation program.

The robot controller 4 is connected to the robot 1 through a cable, and controls positions and speeds of actuators that drive respective joint-axes of the robot 1
and of an actuator that drives the movable electrode 21. In addition, the robot controller 4 outputs a command to the welding power source 3, and monitors electric power that is supplied from the welding power source 3 to the spot welding gun 2. In this embodiment, the actuators employ servomotors.

A teach pendant 5 is connected to the robot controller 4. The teach pendant 5 includes operation buttons 51 and a display screen 52. To teach the operation program for the robot 1, the joint-axes of the robot 1 are operated by operating the operation buttons 51, so that the spot welding gun 2 is located at a predetermined position in a predetermined posture. The robot controller 4 stores the position and posture. Further, the taught operation program can be called up, and a command for start of execution can be made by operating the teach pendant 5.

Fig. 2 is an illustration for explaining configurations of the joint-axes of the robot 1, and a configuration of a movable axis of the spot welding gun 2. In this embodiment, the robot 1 includes six joint-axes, which are named an S-axis, an L-axis, a U-axis, an R-axis, a B-axis, and a T-axis in order from a pedestal side for convenience of understanding. The respective axes are rotationally driven in directions indicated by arrows in Fig. 2. The S-axis, L-axis, and U-axis are occasionally collectively named basic-axes, and the R-axis, B-axis, and T-axis are occasionally collectively named wrist-axes.

Also, the driving axis of the movable electrode 21 of the spot welding gun 2 is named gun-axis. As described above, the gun-axis allows the movable electrode 21 to be extended toward or contracted from the fixed electrode 22. By operating the joint-axes of the robot 1, the position and posture of the spot welding gun 2 at the tip end can be changed in various ways. That is, the spot welding gun 2 can be arranged at various positions in various postures on the workpiece W.

In this embodiment, the example of the robot having the six joint-axes is described. However, this is merely an example. The robot 1 may have seven or more joint-axes. If the purpose of use does not need high degree of freedom for the posture of the spot welding gun 2, the number of joint-axes may be five or smaller.

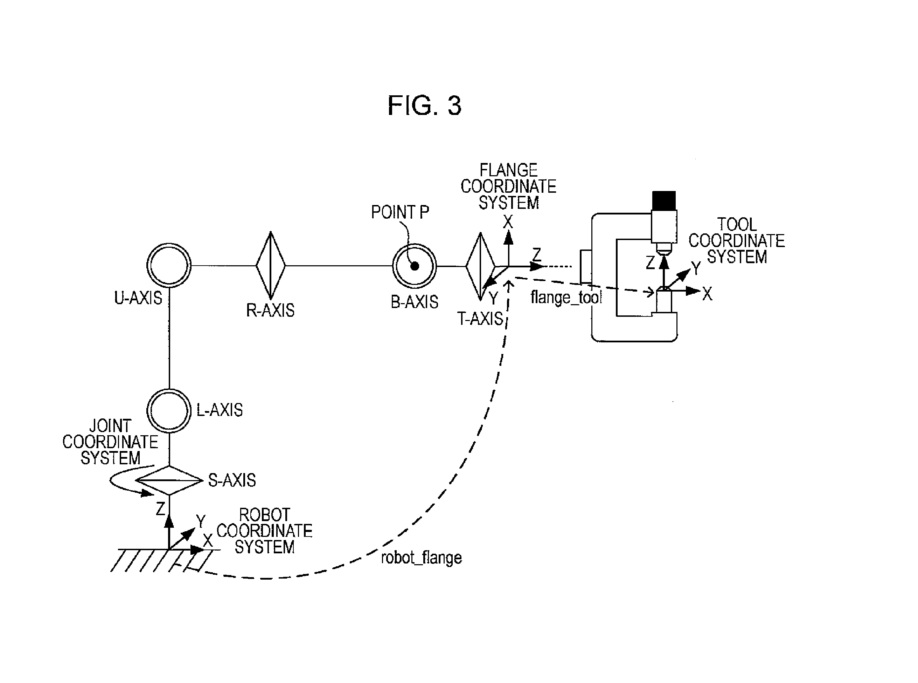

Fig. 3 illustrates coordinate systems set for the robot 1 and the spot welding gun 2. A robot coordinate system is a rectangular coordinate system in which the origin is a pedestal portion of the robot 1, the X-axis extends to the front of the robot 1, the Y-axis extends to the left, and the Z-axis extends to the above. Joint coordinate systems are coordinate systems set for the respective joints of the robot 1. Fig. 3 illustrates a joint coordinate system only for the S-axis.

A flange coordinate system is a rectangular coordinate system provided at a mount surface of the spot welding gun 2 at a tip end portion of the robot 1. A normal direction of the mount surface is the Z-axis. By driving the respective joint-axes of the robot 1, the position and posture of the flange coordinate system based on the robot coordinate system is changed in various ways.

A tool coordinate system is a rectangular coordinate system set for a tool attached to the tip end portion of the robot 1. The origin and direction of the tool coordinate system can be defined in various ways depending on the kind of the tool. With the spot welding gun 2 of this embodiment, the origin is a tip end portion of the fixed electrode 22, the X-axis extends to the front of the gun 2, and the Z-axis extends toward the movable electrode 21. By driving the respective joint-axes of the robot 1, the position and posture of the tool coordinate system based on the robot coordinate system is also changed in various ways. It is to be noted that the tip end portion of the robot 1 and the spot welding gun 2 are separated in Fig. 3 for convenience of understanding.

Also, robot_flange is a rotation matrix that represents a posture of the tip-end flange coordinate system with respect to the robot coordinate system, and flange_tool is a rotation matrix that represents a posture of the tool coordinate system with respect to the flange coordinate system.

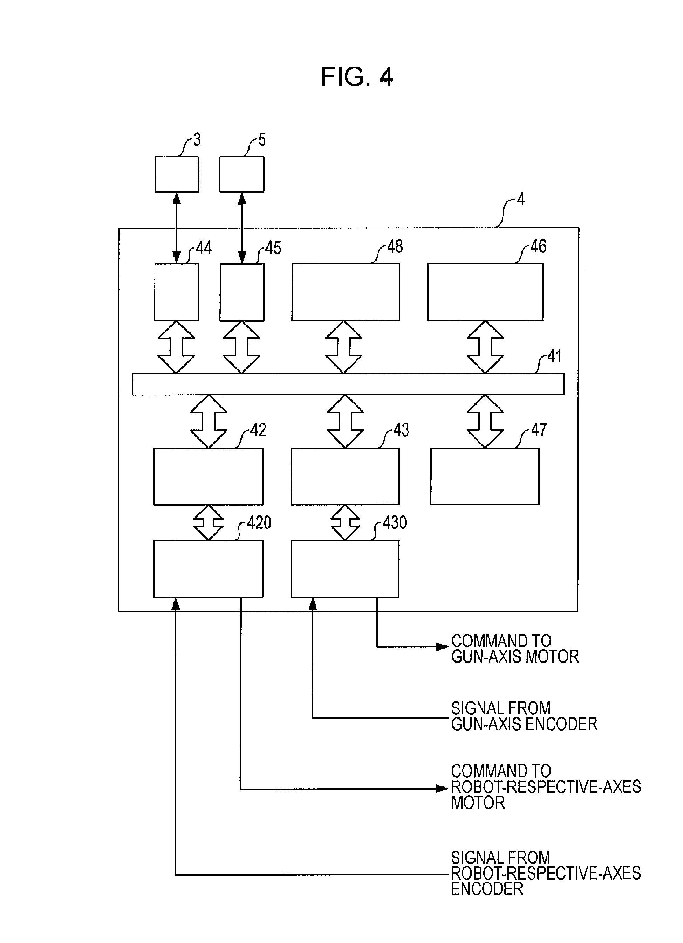

Fig. 4 schematically illustrates portions relating to this embodiment, the portions which are included in an inner configuration of the robot controller 4. The respective portions are connected through a system bus 41, and exchange information through the system bus 41.

A robot-axis controller 42 controls the positions and speeds of the servomotors for the respective joint-axes of the robot 1 through a servo amplifier 420. A gun-axis controller 43 controls the position and speed of the servomotor for the gun-axis of the spot welding gun 2 through a servo amplifier 430. The servomotors for the respective joint-axes of the robot 1 and the servomotor for the gun-axis of the spot welding gun 2 have encoders (not shown) for detecting the positions (rotation angles). Detection values of the encoders are respectively fed back to the controllers 42 and 43 through the servo amplifiers 420 and 430. The robot-axis controller 42 and the gun-axis controller 43 can obtain the positions and speeds of the respective axes from the outputs of the encoders.

I/F portions 44 and 45 are interface portions with respect to the welding power source 3 and the teach pendant 5, acquire the states of the welding power source 3 and teach pendant 5, and output commands thereto.

A work-program/parameter storage portion 46 is a non-volatile memory, and stores the taught work programs and various parameters that are required for the control of the robot 1 and the spot welding gun 2. For example, the parameters may be link parameters required for computation of forward kinematics or inverse kinematics of the robot 1, resolutions of the encoders of the respective joint-axes, and operation-limit positions of the respective joint-axes. An arithmetic processor 47 performs arithmetic processing, for example, by computing the forward kinematics and inverse kinematics and calculating commands that are output to the robot-axis controller 42 and the gun-axis controller 43 every predetermined period. A central processor 48 has a function of managing the respective portions.

Next, a process for automatically determining a teach position for a welding point in the robot system of this embodiment will be described.

The gun-axis position (an extension amount of the movable electrode 21) and the positions of the respective axes of the robot 1 (a position of the fixed electrode 22) are previously roughly taught for the welding-point position. In the following description for the process, it is expected that the teach position of the welding point is more accurately corrected. The rough teaching represents a state in which the positioning in the X-axis and Y-axis directions of the tool coordinate system is completed from among the positioning for the spot welding gun 2 with respect to the workpiece W, and the distance between the tip end of the movable electrode 21 in the Z-axis direction before the movable electrode 21 is extended is within a maximum extension amount of the movable electrode 21. The teaching may be even provided for a state in which the movable electrode 21 and the fixed electrode 22 properly contact the workpiece W.

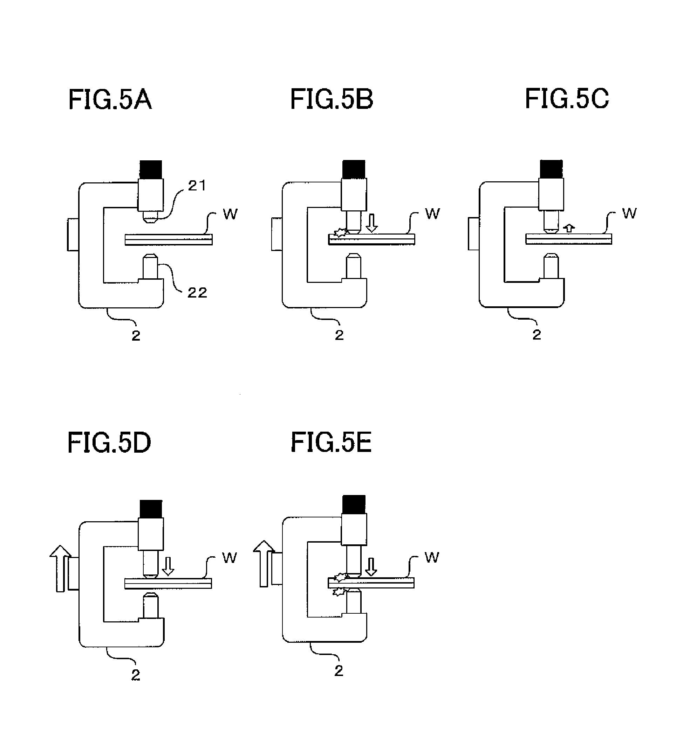

In the robot system of this embodiment, if the welding point during the work program is taught, the operator moves the robot 1 such that the workpiece W is arranged between the electrodes 21 and 22 of the spot welding gun 2 as shown in Fig. 5A, and then the operator gives a command. As the result, the respective joint-axes of the robot 1 and the gun-axis are automatically operated to adjust the position of the spot welding gun 2 and the position of the movable electrode 2, and even if the plate thickness of the workpiece W is unknown, the proper welding-point position can be taught.

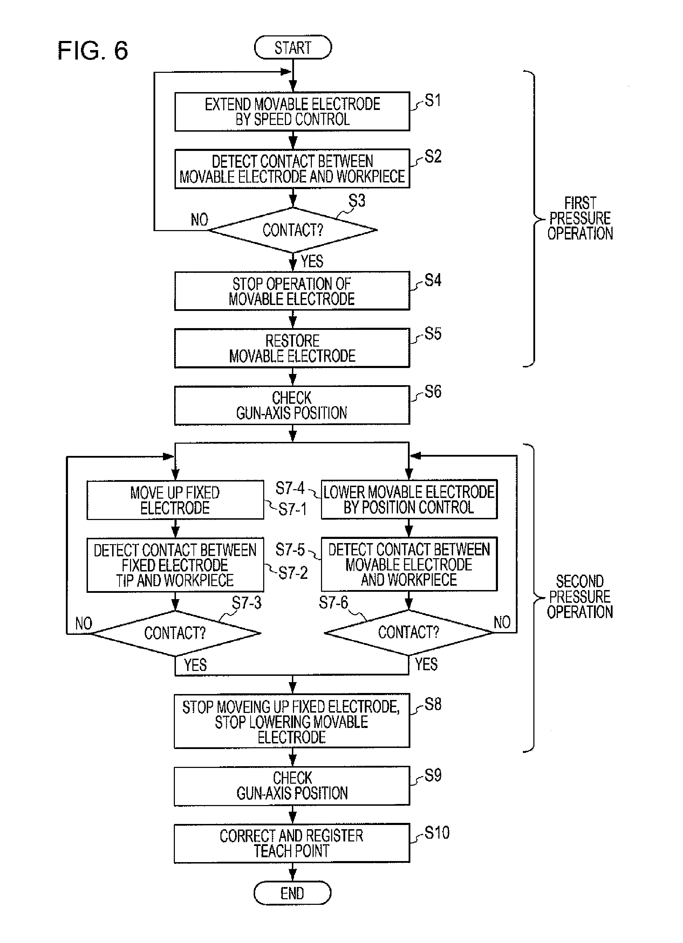

The operations of the spot welding gun 2 at this time are illustrated in Figs. 5A to 5E. The flow of processing is shown in a flowchart of Fig. 6. Figs. 5A to 5E do not illustrate the robot 1 but illustrate only the spot welding gun 2.

Fig. 5A illustrates a state in which the operator operates the teach pendant 5 to operate the robot 1, so that the spot welding gun 2 is guided to the position at which the movable electrode 21 and the fixed electrode 22 pinch the welding point on the workpiece W.

The operator operates the teach pendant 5 from the state in Fig. 5A to give a command for automatically adjusting the position of the spot welding gun 2 and the position of the movable electrode 21.

Then, the gun-axis is operated by speed control, and the movable electrode 21 is extended toward the fixed electrode 22 at a predetermined speed (step S1 in Fig. 6). The robot controller 4 detects contact between the movable electrode 21 and the workpiece W based on a torque command to the gun-axis servomotor (step S2 in Fig. 6). If the movable electrode 21 contacts the upper surface of the workpiece W as shown in Fig. 5B, and a torque command value exceeds a predetermined threshold Th1, it is determined that the movable electrode 21 contacts the workpiece W (if "YES" in step S3 in Fig. 6), the operation of the movable electrode 21 is stopped (step S4 in Fig. 6). Immediately after this, the movable electrode 21 is slightly restored as shown in Fig. 5C (step S5 in Fig. 6). The series of operations is named first pressure operation.

After the first pressure operation, the gun-axis position is checked (step S6 in Fig. 6) whether a foreign substance is present on the workpiece W or whether the position of the workpiece W is markedly shifted in the extension/contraction direction of the movable electrode 21. The processing for checking the gun-axis position will be described later. Now, it is assumed that the gun-axis position has no problem, and hence the processing goes on to the next.

Then, the fixed electrode 22 is moved toward the movable electrode 21 by operating the respective axes of the robot 1 (step S7-1 in Fig. 6), and contact between the fixed electrode 22 and the lower surface of the workpiece W is detected (step S7-2 in Fig. 6). Since the spot welding gun 2 is entirely moved, the movable electrode 21, which contacts the upper surface of the workpiece W, may be separated from the workpiece W. Therefore, position control of the gun-axis is performed. In particular, as shown in Fig. 5D, an operation for further extending the movable electrode 21 toward the fixed electrode 22 is simultaneously performed as shown in Fig. 5D (step S7-4 in Fig. 6). In the position control in this case, the position of the movable electrode 21 based on the robot coordinate system is maintained at the position when the first pressure operation is completed.

Referring to Fig. 5E, if it is detected that the movable electrode 21 and the fixed electrode 22 contact the workpiece W (if "YES" in step S7-3 or S7-6 in Fig. 6), the moving-up operation of the spot-welding gun 2 and the lowering operation of the movable electrode 21 are stopped (step S8 in Fig. 6). The series of operations is named second pressure operation.

The contact is detected in step S7-6 in Fig. 6 in a manner similar to the first pressure operation (step S3 in Fig. 6). The methods for detecting the contact in steps S3 and S7-3 in Fig. 6 will be described later in detail.

After the second pressure operation, the gun-axis position is also checked (step S9 in Fig. 6) whether a foreign substance is present on the workpiece W or whether the position of the workpiece W is shifted in the extension/contraction direction of the movable electrode 21. The processing for checking the gun-axis position will be also described later. Now, it is assumed that the gun-axis position has no problem, and hence the processing goes on to the next.

Then, the positions of the respective axes of the robot 1 and the gun-axis position when the operations are stopped are stored in the work-program/parameter storage portion 46, as the teach position of the welding point (step S10 in Fig. 6).

The above-described process is the rough process for automatically determining the teach position of the welding point. As described above, in this embodiment, the movable electrode 21 contacts the workpiece W in the first pressure operation, and then the fixed electrode 22 contacts the workpiece W in the second pressure operation.

In the second pressure operation, since the movable electrode 21 keeps its contact position to the workpiece W by the position control, the bending amount of the workpiece W due to the contact with the electrodes 21 and 22 is determined by the magnitude of force (threshold Th1) when the movable electrode 21 contacts the workpiece W in the first pressure operation.

If the workpiece W markedly bends, the pressure force by the spot welding gun 2 may not properly act on the workpiece W, or welding may be performed at a position shifted from the predetermined welding point due to deformation of the workpiece W. This may result in degradation of welding quality. Hence, the bending amount of the workpiece W has to be reduced. To reduce the bending amount of the workpiece W, the processing for detecting the contact of the movable electrode 21 in step S3 in Fig. 6 has to be simplified, and the contact has to be detected and the operation of the gun-axis has to be stopped quickly as possible, i.e., when the force acting on the workpiece W is small.

Also, when the contact is detected in the second pressure operation (step S7-3 in Fig. 6), if the pressure force by the fixed electrode 22 to the workpiece W is improper, the welding quality may be degraded. Hence, the "contact" has to be determined when a proper external force by the workpiece W acts on the spot welding gun 2 in the second pressure operation. Now, the methods for detecting the contact respectively in the first and second pressure operations will be described below.

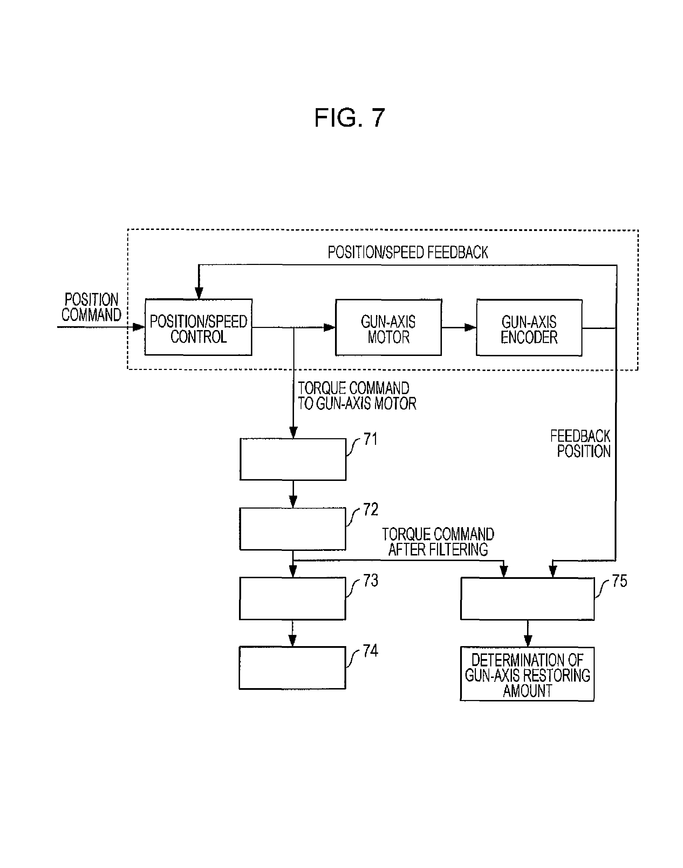

The method for detecting the contact in the first pressure operation (step S3 in Fig. 6) according to this embodiment will be described. Fig. 7 schematically illustrates the process for detecting the contact in the first pressure operation. In Fig. 7, a part surrounded by dotted lines represents a position/speed control loop of the gun-axis.

In the first pressure operation, as described above, the contact between the movable electrode 21 and the workpiece W is detected based on the torque command to the gun-axis servomotor.

However, the torque command contains a gravity torque and a friction torque that act on the gun-axis. If the original value of the torque command is compared with the predetermined threshold to detect the contact, the detection threshold has to be a large value, resulting in that a time lag may be generated from when the contact actually occurs to when the contact is detected. That is, a time is required before the gun-axis is stopped, and the bending amount of the workpiece W may be increased.

To decrease the detection threshold and to decrease the time before the gun-axis is stopped, the gravity torque and the friction torque have to be compensated in real-time. In this embodiment, a waveform of the torque command to the gun-axis in the first pressure operation is processed by a high-pass filter 71 and hence a low-frequency component is eliminated. With this processing, gravity and friction components contained in the torque command are eliminated.

The torque command output from the high-pass filter 71 is further processed by a notch filter 72. The notch filter 72 eliminates a torque ripple component of the gun-axis servomotor from the torque command. A notch frequency is determined by the number of poles and the number of slots of the gun-axis servomotor, and by the operation speed of the motor (revolutions per second). For example, if a servomotor with 14 poles and 12 slots is used for the gun-axis, and is operated at 1000 [rpm], a ripple frequency in mechanical terms based on the number of poles is obtained as follows: (14/2)x(1000/60) - 116.67 [Hz].

Also, a ripple frequency in electrical terms based on the number of slots is obtained as follows: 12x(1000/60) = 200 [Hz]. A combined ripple frequency of the above ripple frequencies is obtained as follows: (14/2)x12x(1000/60) = 1400 [Hz].

Further, the torque command may contain highfrequency components that are the integral multiples, such as the double, triple ..., of these frequencies. The torque ripple components are eliminated by the notch filter 72, and the result is compared with the threshold Th1 (reference numeral 73 in Fig. 7). If the filtered torque command exceeds the threshold Th1, it is determined that the movable electrode 21 contacts the workpiece W (reference numeral 74 in Fig. 7, step S3 in Fig. 6), and the operation of the gun-axis is stopped (step S4 in Fig. 6). It is to be noted that the number of poles and the number of slots of the gun-axis servomotor may be previously stored as parameters in the work-program/ parameter storage portion 46 in the robot controller 4, and the parameters may be used for determining the notch frequency.

Since the high-pass filter 71 eliminates the gravity and friction components contained in the torque command, and the notch filter 72 further eliminates the torque ripple, a small value can be set as the threshold Th1 for detecting the contact. That is, the time lag due to the detection of the contact can be reduced.

However, even with such processing, the movable electrode 21 already contacts the workpiece W before the contact between the movable electrode 21 and the workpiece W is detected due to a control delay or the like. When the gun-axis is stopped, the workpiece W is pressed by the movable electrode 21 and hence the workpiece W bends.

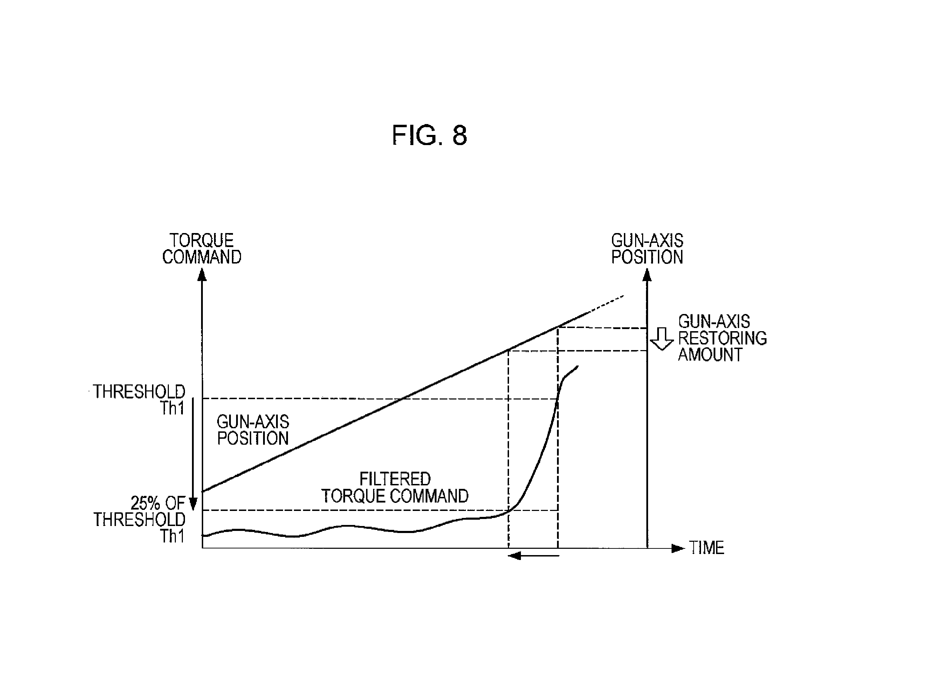

Thus, after the operation of the gun-axis is stopped, the gun-axis is inversely moved, so that the movable electrode 21 is slightly restored. The method for determining a restoring amount of the gun-axis will be described with reference to Figs. 7 and 8. In the first pressure operation, the torque command after the filtering and the gun-axis position are stored every predetermined period (reference numeral 75 in Fig. 7). After the torque command exceeds the threshold Th1 and the operation of the gun-axis is stopped, the time at which the torque command reaches a predetermined ratio of the threshold Th1 is obtained from data of the stored torque command and gun-axis position. In an example in Fig. 8, the ratio is 25% of the threshold Th1.

The gun-axis position when the torque command is 25% of the threshold Th1 is acquired, and the movable electrode 21 is restored to that position. As described above, since the movable electrode 21 is slightly restored from the position at which the contact is detected and the movable electrode 21 is stopped, the bending amount of the workpiece W can be reduced, and the proper gun-axis position can be taught.

It is to be noted that the threshold Th1 and the predetermined ratio of the threshold Th1 used when the movable electrode 21 is slightly restored may be previously set as parameters in the work-program/parameter storage portion 46.

The above-described method is for detecting the contact in the first pressure operation.

Next, the method for detecting the contact in the second pressure operation will be described. In the second pressure operation, the contact between the fixed electrode 22 and the workpiece W is detected. The fixed electrode 22 does not include a drive portion unlike the movable electrode 21, and hence the contact is not detected from the torque command of the gun-axis servomotor. Hence, a state amount of the robot 1 that supports the body of the spot welding gun 2 including the fixed electrode 22 is used to detect the contact with respect to the workpiece W. At this time, a disturbance observer that estimates a disturbance torque acting on the robot 1 is used.

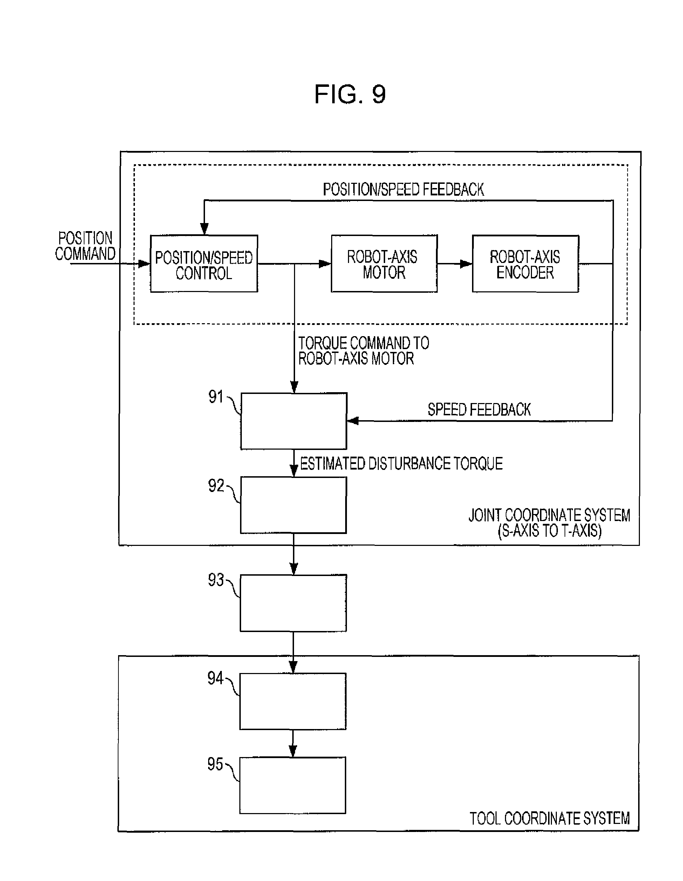

Fig. 9 schematically illustrates the process for detecting the contact in the second pressure operation. In Fig. 9, a part surrounded by dotted lines represents a position/speed control loop of the respective axes of the robot 1.

First, a disturbance observer 91 estimates a disturbance torque acting on a load side (spot welding gun 2) based on torque commands and position feedback values to the respective joint-axes of the robot 1. The estimated disturbance torque contains torques due to gravity and friction, and hence the torque due to the gravity is compensated by dynamics computation in the disturbance observer 91.

Then, the output of the disturbance observer 91 is processed by a high-pass filter 92 and hence a low-frequency component is eliminated. Accordingly, the torque due to the friction is eliminated.

In this process, the disturbance torque compensated for the gravity and friction is obtained based on the joint coordinate systems of the respective axes of the robot 1. Thus, the disturbance torque is transformed into an estimated external force value in the open/close direction of the spot welding gun 2 (Z-axis of the tool coordinate system) by coordinate transformation (reference numeral 93 in Fig. 9).

Described next is a method for obtaining estimated external force values based on disturbance torques of the three basic-axes (S-axis, L-axis, U-axis) and estimated external force values based on disturbance torques of the three wrist-axes (R-axis, B-axis, T-axis) of the robot 1,
and using an average value of these estimated external force values, as an example of the method for estimating the external force acting in the Z-axis direction of the tool coordinate system.

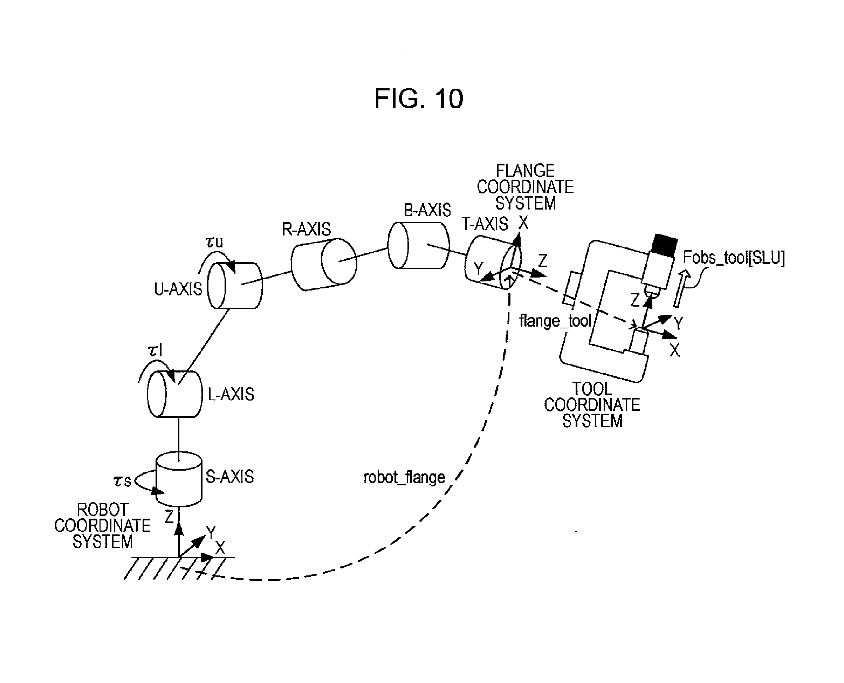

First, the estimation of the external forces based on the disturbance torques of the basic-axes (S-axis, L-axis, U-axis) of the robot 1 is described with reference to Fig. 10. Computation for transforming the disturbance torques in the joint coordinate systems of the basic-axes is mainly divided into two steps as follows.

(1) By using a Jacobian transpose and inverse matrix $(J^T)^{-1}$, disturbance torques $\tau s$, $\tau l$, and $\tau u$ of the joint coordinate systems of the basic-axes (S-axis, L-axis, U-axis) of the robot 1 are transformed into an estimated external force value of the robot coordinate system.
(2) By using the rotation matrix robot_flange and the tool rotation matrix flange_tool, the external force of the robot coordinate system is transformed into the external force in the Z-axis direction of the tool coordinate system.

First, the process of (1) is described.

(1) Transformation from Disturbance Torques of Joint Coordinate Systems into Estimated External Force Value of Robot Coordinate System

The above-mentioned Jacobian matrix J is a matrix representing the relationship of small displacement between a joint coordinate system and a rectangular coordinate system of the robot 1. By using a transpose matrix $J^T$ of the Jacobian matrix J, a force F of the rectangular coordinate system can be transformed into a torque $\tau$ of the joint coordinate system. Further, by obtaining an inverse matrix $(J^T)^{-1}$ of the transpose matrix, the torque $\tau$ of the joint coordinate system can be transformed into the force F of the rectangular coordinate system. The method for computing the Jacobian matrix J when a six-axis robot is used like this embodiment is provided by Expression 1 as follows:

$$J = \begin{pmatrix} {}^0s_1 \times ({}^0P_E - {}^0P_1) & {}^0s_2 \times ({}^0P_E - {}^0P_2) & {}^0s_3 \times ({}^0P_E - {}^0P_3) & {}^0s_4 \times ({}^0P_E - {}^0P_4) & {}^0s_5 \times ({}^0P_E - {}^0P_5) & {}^0s_6 \times ({}^0P_E - {}^0P_6) \\ {}^0s_1 & {}^0s_2 & {}^0s_3 & {}^0s_4 & {}^0s_5 & {}^0s_6 \end{pmatrix}$$

$$\ldots \ (1),$$

where $^0 s_i$ is a rotating-direction vector of an i-th joint coordinate (robot base coordinate reference), $^0P_i$ is a position vector of the i-th joint (robot base coordinate reference), x is a vector product, and E is a position vector of the tip end (or a point of application of an external force) of the tool of the robot 1.

The obtained Jacobian matrix J is a 3x3 matrix, and for convenience of understanding, matrix elements are provided by Expression 2 as follows:

$$J = \begin{pmatrix} A & B & C \\ D & E & F \\ G & H & I \end{pmatrix} \quad \ldots \ (2).$$

Also, the transpose matrix $J^T$ of the Jacobian matrix J can be expressed by Expression 3 as follows:

$$J^T = \begin{pmatrix} A & D & G \\ B & E & H \\ C & F & I \end{pmatrix} \quad \ldots \ (3).$$

By obtaining the inverse matrix of the Jacobian transpose matrix $J^T$ , the Jacobian transpose and inverse T -1 T matrix $(J^T)^{-1}$ can be obtained. A determinant $det(J^T)_{-1}$ of the Jacobian transpose matrix J is obtained by Expression 4 as follows:

$$det(\,J^T\,) =$$
$$A*E*I + B*F*G + C*D*H - A*F*H - B*D*I - C*E*G$$
$$\ldots \ (4).$$

By using the determinant $det\,(J^T)_{-1}$ of the Jacobian transpose matrix $J^T$ in Expression 4, the Jacobian transpose and inverse matrix $(J^T)_{-1}$ can be obtained by Expression 5 as follows:

$$\left(J^T\right)^{-1} = \frac{1}{det\left(J^T\right)} \begin{pmatrix} E*I - F*H & C*H - B*I & B*F - C*E \\ F*G - D*I & A*I - C*G & C*D - A*F \\ D*H - E*G & B*G - A*H & A*E - B*D \end{pmatrix} \ldots$$

$$(5).$$

Thus, if the disturbance torques of the joint coordinate systems of the basic-axes (S-axis, L-axis, U-axis) of the robot 1 are defined as follows:

$$\tau obs = [\tau s, \ \tau l, \ \tau u]^T \ \ldots \ (6),$$

where $\tau obs$ is a disturbance torque vector of the joint coordinate system, $\tau s$ is a disturbance torque of the joint coordinate system of the S-axis, $\tau l$ is a disturbance torque of the joint coordinate system of the L-axis, and $\tau u$ is a disturbance torque of the joint coordinate system of the U-axis, and if the expected external force value of the robot coordinate system is defined as follows:

$$\overline{Fobs\_robot} = [Fx, \ Fy, \ Fz]^T \ \ldots \ (7),$$

where Fobs_robot is a force vector, and F is a driving force in the robot coordinate system, the estimated external force value of the robot coordinate system can be obtained by Expression 8 as follows:

$$\text{Fobs\_robot} = (\text{J}^{\text{T}})^{-1} \cdot \tau \text{obs} \quad \dots \quad (8).$$

By performing computation with Expressions 5 and 8 in accordance with a change in posture of the robot 1, the estimated external force value Fobs_robot of the robot coordinate system can be obtained in the entire operation region of the robot 1.

Next, the process of (2) is described. (2) Transformation from Robot Coordinate System to Tool Coordinate System through Flange Coordinate System

The rotation matrix robot_flange representing the posture of the tip-end flange coordinate system with respect to the robot coordinate system can be expressed by Expression 9 as follows:

$$robot\_flange = {}^{0}R_{1}\,{}^{1}R_{2}\,{}^{2}R_{3}\,{}^{3}R_{4}\,{}^{4}R_{5}\,{}^{5}R_{6}\,{}^{6}R_{T} \quad \dots \quad (9).$$

where ${}^{n}R_{n+1}$ is a 3×3 rotation matrix from an n coordinate system to an (n+1) coordinate system.

Also, the rotation matrix flange_tool representing the posture of the tool coordinate system with respect to the flange coordinate system can be obtained by Expression 10 from a tool posture (Rx, Ry, Rz) [deg] set by the operator. The tool posture can be set as tool information when the operator operates the teach pendant 5. It is to be noted that the direction toward the movable electrode 21 viewed from the fixed electrode 22 is the +Z direction. Expression 10 is as follows:

$$flange\_tool =$$

$$\begin{pmatrix} \cos Ry * \cos Rz & \sin Rx * \sin Ry * \cos Rz - \cos Rx * \sin Rz & \cos Rx * \sin Ry * \cos Rz * + \sin Rx * \sin Rz \\ \cos Ry * \sin Rz & \sin Rx * \sin Ry * \sin Rz + \cos Rx * \cos Rz & \cos Rx * \sin Ry * \sin Rz - \sin Rx * \cos Rz \\ -\sin Ry & \sin Rx * \cos Ry & \cos Rx * \cos Ry \end{pmatrix}$$

$$\dots \quad (10).$$

By using transpose matrixes of the two rotation matrixes robot_flange and flange_tool, an estimated external force value Fobs_tool[SLU] in the tool coordinate system can be obtained by Expression 11 from the estimated external force value Fobs_robot of the robot coordinate system as follows:

$$\text{Fobs\_tool[SLU]} =$$

$$(\text{flange\_tool})^{\text{T}} \cdot (\text{robot\_flange})^{\text{T}} \cdot \text{Fobs\_robot} \quad \dots \quad (11).$$

In this process, the external force is estimated based on the disturbance torques of the basic-axes (S-axis, L-axis, U-axis) of the robot 1.

Next, estimation of external forces for the wrist-axes is described.

For the three wrist-axes (R-axis, B-axis, T-axis), how the force acting on the spot welding gun 2 acts on the wrist joint-axes can be geometrically obtained. On the contrary, the expected external force value Fobs_tool acting on the spot welding gun 2 is obtained from the disturbance torques of the joint-axes (R-axis, B-axis, T-axis).

Referring to Figs. 2 and 3, in a case in which no offset is present in the Y-axis direction of the tool coordinate system when the spot welding gun 2 is attached to the tip end portion of the robot 1, if the external force acts on the spot welding gun 2, torques act on the R-axis and the B-axis as disturbances. When the contact is detected, only the component acting in the open/close direction of the spot welding gun 2 is subjected to the detection from among the external forces, while a component orthogonal to the open/close direction of the spot welding gun 2 is ignored. Thus, no torque acts on the T-axis.

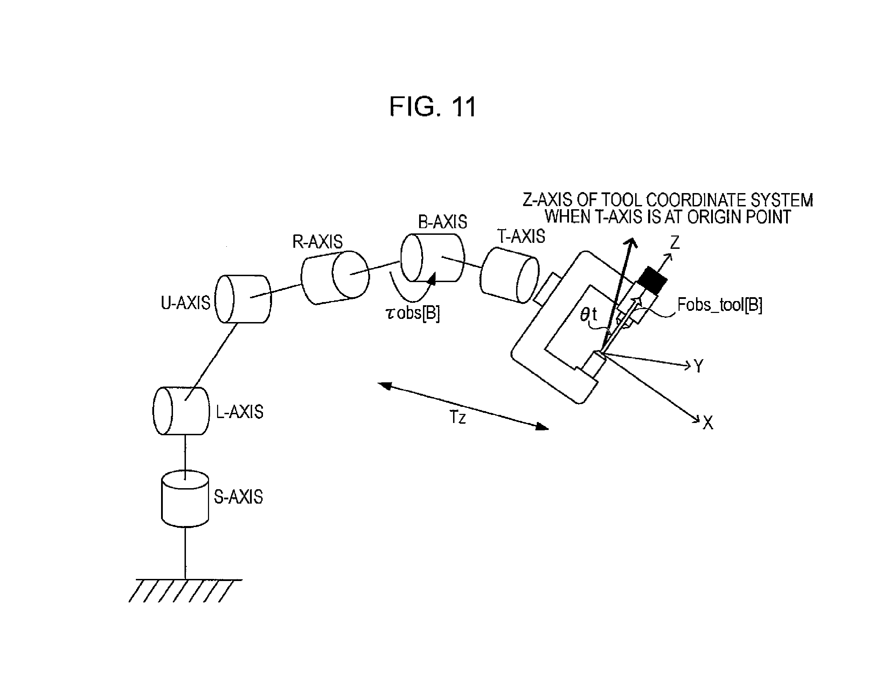

Computation for the B-axis is described with reference to Fig. 11. As expressed in Expression 12 given below, a force obtained by projecting an external force Fobs_tool[B] acting in the open/close direction of the spot welding gun 2 onto a plane orthogonal to the B-axis is the same as a force obtained by dividing a disturbance torque $\tau$obs[B] of the B-axis by a distance Tz from a control point (the tip end of the fixed electrode 22) of the spot welding gun 2 to the center of rotation of the B-axis.

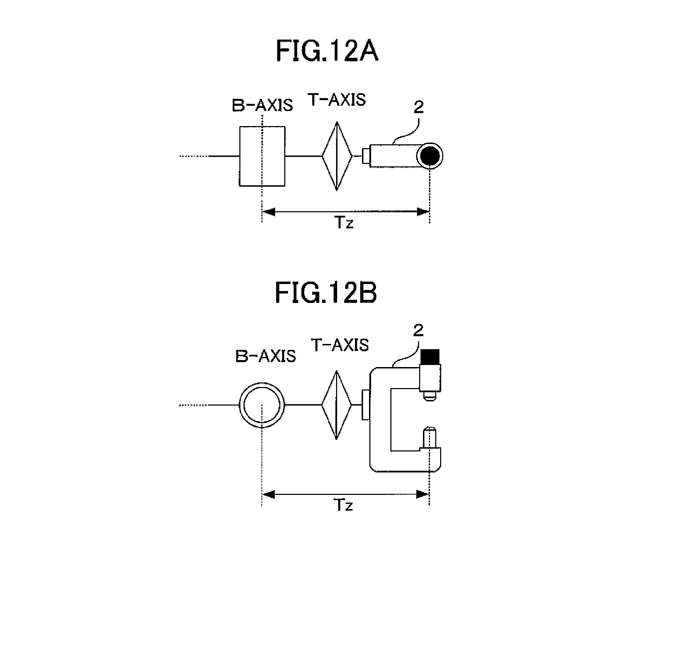

The definition of Tz is shown in Figs. 12A and 12B. Fig. 12A is a top view and Fig. 12B is a side view. Tz contains the control point (the tip end of the fixed electrode 22) of the spot welding gun 2, and is a distance between a plane that is parallel to the rotation axis of the B-axis and the rotation axis of the B-axis. The magnitude of Tz is not changed even if the B-axis and T-axis are rotated. Expression 12 is as follows:

$$\texttt{Fobs\_tool[B]} \cdot \cos\theta t = \tau \texttt{obs[B]/Tz} \ ... \ (12),$$

where $\theta t$ is a rotation angle of the T-axis.

Therefore, the external force Fobs_tool[B] acting in the open/close direction of the spot welding gun 2 can be obtained by Expression 13 from the torque acting on the B-axis as follows:

$$Fobs\_tool[B] = \frac{\tau\, obs[B]}{Tz \cdot \cos\theta\, t} \qquad ... \ (13).$$

Also for the R-axis, an external force Fobs_tool[R] acting in the open/close direction of the spot welding gun 2 can be similarly obtained by Expression 14 as follows:

$$Fobs\_tool[R] = \frac{\tau\, obs[R]}{Tz \cdot \cos\theta\, b \cdot \sin\theta\, t} \qquad ... \ (14),$$

where $\tau$obs[R] is a disturbance torque of the R-axis, $\theta b$ is a rotation angle of the B-axis, and $\theta t$ is a rotation angle of the T-axis.

The obtained values Fobs tool[SLU], Fobs_tool[B], and Fobs_tool[R] are averaged (reference numeral 94 in Fig. 9), the result is compared with a predetermined external force threshold Th2 (reference numeral 95 in Fig. 9), it is determined that the fixed electrode 22 contacts the workpiece W if the expected external force value exceeds the threshold Th2 (step S7-3 in Fig. 6), and the operation of the robot 1 is stopped.

In this embodiment, the axes are divided into the three basic-axes and the three wrist-axes, the average of the results of the external force estimation processing are obtained for the basic-axes and the wrist-axes, and the average is compared with the threshold. However, this is merely an example as mentioned above. For an alternative method, absolute values of estimated external force values based on disturbance torques of the basic-axes (S-axis, L-axis, U-axis) and the wrist-axes (R-axis, B-axis, T-axis) of the robot 1 may be integrated, and the integral value may be compared with a threshold, to detect the contact between the fixed electrode 22 and the workpiece W.

The above-described method is for detecting the contact in the second pressure operation.

While the fixed electrode 22 is moved toward the movable electrode 21 by the operation of the robot 1 and the contact is detected, the movable electrode 21 is moved toward the fixed electrode 22 by the position control, the filtered torque command is compared with the threshold Th1 like the first pressure operation, and if the contact is detected, the movable electrode 21 is stopped, like steps S7-4 to S7-6 in Fig. 6. However, in this case, the movable electrode 21 is not restored after the contact.

With this process, even if the plate thickness of the workpiece W is unknown, the proper welding-point position can be taught, and the state in which the bending amount of the workpiece W by the movable electrode 21 and the fixed electrode 22 is reduced can be taught.

When the above-described first and second pressure operations are completed, the workpiece W becomes properly pinched by the movable electrode 21 and the fixed electrode 22 of the spot welding gun 2.

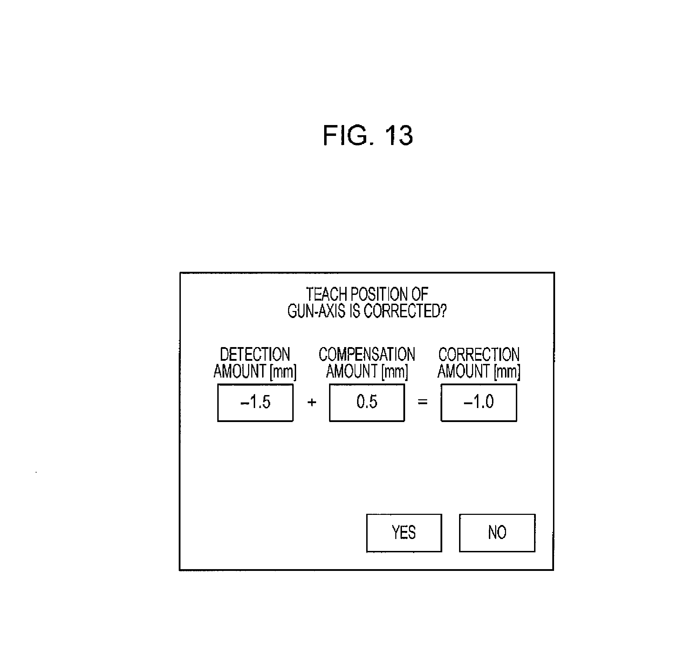

If the robot 1 is in the teach mode, a screen as shown in Fig. 13 is displayed on the display screen 52 of the teach pendant 5 after the series of processing to step S9 in Fig. 6 is completed, to urge the operator to teach the current position.

In Fig. 13, a detection amount is a difference between a roughly taught gun-axis position and a current gun-axis position determined as the result of the first and second pressure operations. The Z-axis direction of the tool coordinate system is positive. The detection amount of -1.5 mm in Fig. 13 represents that the movable electrode 21 contacts the workpiece W while the movable electrode 21 is extended downward by 1.5 mm as compared with the rough teaching.

A compensation amount represents the restoring amount by which the movable electrode 21 is restored to reduce the bending amount of the workpiece W by the movable electrode 21. Though described above, the movable electrode 21 is slightly restored even in the first pressure operation to reduce the bending amount (step S5 in Fig. 6). To further reduce the bending amount of the workpiece W, when the gun-axis position is stored as the teach position, the position obtained by further restoring upward the movable electrode 21 by the compensation amount from the actual position is stored. Also, for each of the respective axes of the robot 1, the position obtained by moving the fixed electrode 22 toward the movable electrode 21 by the compensation amount from the actual position is stored. The sum of the detection amount and the compensation amount is a correction amount.

If the operator selects "YES," the positions of the respective axes of the robot 1 and the gun-axis position considering the compensation amount are stored in the work-program/parameter storage portion 46 of the robot controller 4, as teach position information for the welding point, the information which belongs to the work program.

The operator can operate the teach pendant 5 to move the robot 1 to the next welding point, and the teach position for the next welding point can be corrected similarly.

Since the correction amount for the teach position is displayed on the display screen 52 of the teach pendant 5, the operator can easily recognize the correction amount for each welding point, and even if an error occurs for the teach position of the gun-axis, the error can be found immediately and handled.

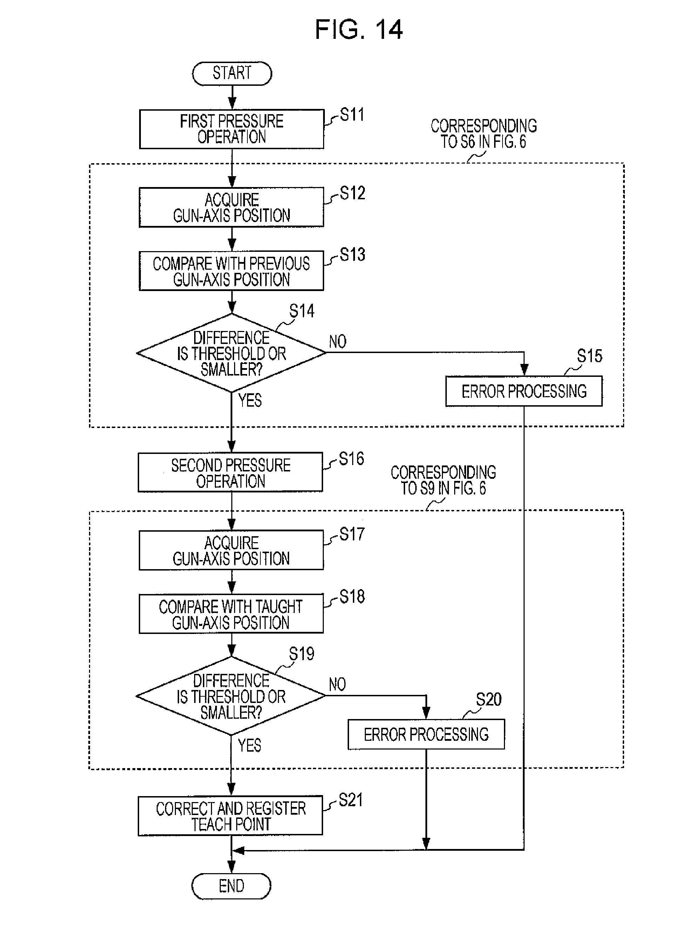

Next, the processing for checking the gun-axis position after the first and second pressure operations will be described with reference to Fig. 14.

As described above, in this embodiment, the robot 1 is moved to the position at which the movable electrode 21 and the fixed electrode 22 pinch the welding point on the workpiece W as shown in Fig. 5A, and then the first pressure operation is automatically performed. Although this processing is similar to that in Fig. 6, this processing is collectively named step S11 in Fig. 14. When the contact between the movable electrode 21 and the workpiece W is detected, the gun-axis is stopped, and then the movable electrode 21 is slightly restored.

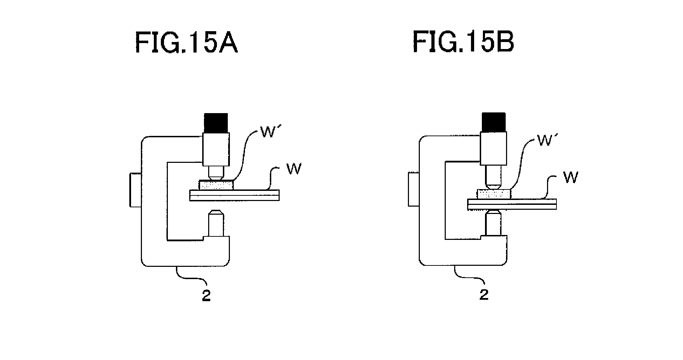

The gun-axis position (the extension length of the movable electrode 21) is acquired (step S12 in Fig. 14), and the gun-axis position, which is stored by rough teaching, is compared with the current gun-axis position (step S13 in Fig. 14). If the difference between both positions is larger than a predetermined threshold Th3 (if "NO" in step S14 in Fig. 14), it is recognized that a foreign substance is present on the workpiece W as shown in Fig. 15A or the position of the workpiece W is shifted in the extension/contraction direction of the movable electrode 21, an alarm is generated based on the recognition, and the operation of the robot 1 is stopped (step S15 in Fig. 14). Fig. 15A illustrates a state in which the contact is detected although the movable electrode 21 is only slightly extended because a foreign substance W' is present on a workpiece W.

If the difference between the positions is the threshold Th3 or smaller, the difference is recognized as a value within a permissible error, and the processing goes on to the second pressure operation. Although this processing is similar to that in Fig. 6, this processing is collectively named step S16 in Fig. 14.

When the contact is detected and the movable electrode 21 and the fixed electrode 22 are stopped in the second pressure operation, the gun-axis position (the extension length of the movable electrode 21) is acquired (step S17 in Fig. 14), and the gun-axis position stored by the rough teaching is compared with the current gun-axis position (step S18 in Fig. 14). If the difference between both positions is larger than a predetermined threshold Th4 (if "NO" in step S19 in Fig. 14), it is recognized that a foreign substance is present on the workpiece W as shown in Fig. 15B or the position of the workpiece W is shifted in the extension/contraction direction of the movable electrode 21, an alarm is generated based on the recognition, and the operation of the robot 1 is stopped (step S20 in Fig. 14). Fig. 15B illustrates a state in which the position of the movable electrode 21 is determined as a proper position in the first pressure operation because a foreign substance W' is present on the workpiece W and also the position of the workpiece W is shifted. The contact is detected while the movable electrode 21 is not sufficiently extended after the second pressure operation.

These thresholds Th3 and Th4 may be previously stored in the work-program/parameter storage portion 46.

If the difference between both positions is the threshold or smaller, the difference is recognized as a value within a permissible error, the current positions of the respective axes of the robot 1 and the current gun-axis position are stored as teach positions in the work-program/parameter storage portion 46 instead of the stored teach positions (step S21 in Fig. 14, step S10 in Fig. 6). Since the gun-axis position is checked after the first and second pressure operations, even if an error occurs for the workpiece W, the error can be found immediately and handled.

Obviously, numerous modifications and variations of the present invention are possible in light of the above teachings. It is therefore to be understood that within the scope of the appended claims, the invention may be practiced otherwise than as specifically described herein.

**Claims**

1. A robot system comprising:

   an articulated robot including
   a spot welding gun having
   a fixed electrode, and
   a movable electrode that is arranged opposite to the fixed electrode and can be extended toward or contracted from the fixed electrode by driving of a motor,

   wherein the robot system performs spot welding such that the articulated robot moves the spot welding gun to a predetermined welding point on a member to be welded, and that the fixed electrode and the movable electrode pinch the member to be welded in a thickness direction of the member to be welded, the robot system performing processing when the robot system teaches a position of the welding point for the robot, the processing including first processing for moving the spot welding gun to a position at which the movable electrode and the fixed electrode pinch the welding point,
   second processing for extending the movable electrode toward the member to be welded by the driving of the motor, detecting contact between the movable electrode and the member to be welded based on a torque command to the motor, and stopping an operation of the movable electrode after the contact is detected, and
   third processing for operating the robot toward the movable electrode to move the fixed electrode toward the member to be welded while maintaining a state in which the movable electrode contacts the member to be welded by the driving of the motor, detecting contact between the fixed electrode and the member to be welded based on a disturbance torque that acts on a joint of the robot, and stopping the operation of the robot after the contact is detected.

2. The robot system according to claim 1, wherein a position obtained by restoring the movable electrode by a predetermined compensation amount after the third processing is completed, and positions of respective joints of the robot obtained by operating the fixed electrode toward the movable electrode by the compensation amount serve as teach positions for the welding point.

3. The robot system according to claim 2, further comprising:

   a portable teach device,

   wherein when the position of the movable electrode is taught after the third processing is completed, a correction amount containing the predetermined compensation amount from the previous teach position of the movable electrode is displayed on a display screen of the portable teach device.

4. The robot system according to claim 1, wherein in the second processing, filtering processing with a high-pass filter is performed and then filtering processing with a notch filter is performed for the torque command to the motor, and the filtered torque command is compared with a first predetermined threshold, to detect the contact between the movable electrode and the member to be welded.

5. The robot system according to claim 4, wherein a notch frequency of the notch filter is determined based on the number of poles and the number of slots of the motor.

6. The robot system according to claim 4 or 5, wherein in the second processing, an extension amount of the movable electrode and the torque command to the motor after the filtering processing are associated with each other and stored every predetermined period, and

wherein after the second processing is completed, the movable electrode is restored by an amount calculated based on the stored extension amount and torque command.

7. The robot system according to claim 1,

wherein in the third processing, an estimated disturbance torque is obtained by a disturbance observer from torque commands to motors of respective axes of the robot and speed detection values of the respective axes, processing with a high-pass filter is performed for the estimated disturbance torque, and then coordinate transformation is performed to estimate an external force that acts on the fixed electrode, and

wherein a value of the estimated external force is compared with a second predetermined threshold to detect the contact between the fixed electrode and the member to be welded.

8. The robot system according to claim 1,

wherein after the second processing is completed, an extension amount of the movable electrode is checked to detect an error of the member to be welded, and

wherein after the third processing is completed, an extension amount of the movable electrode is checked to detect an error of the member to be welded.

# FIG.1

# FIG.2

FIG. 3

EP 2 402 109 A2

# FIG. 4

COMMAND TO
GUN-AXIS MOTOR

SIGNAL FROM
GUN-AXIS ENCODER

COMMAND TO
ROBOT-RESPECTIVE-AXES
MOTOR

SIGNAL FROM
ROBOT-RESPECTIVE-AXES
ENCODER

FIG.5A

FIG.5B

FIG.5C

FIG.5D

FIG.5E

FIG. 6

```
                    ┌──────────┐
                    │  START   │
                    └──────────┘
                         │
         ┌───────────────▼──────────────────┐        ┐
         │  EXTEND MOVABLE ELECTRODE         │ ─S1    │
         │  BY SPEED CONTROL                 │        │
         └───────────────┬──────────────────┘        │
                         │                            │
         ┌───────────────▼──────────────────┐        │
         │  DETECT CONTACT BETWEEN           │ ─S2    │
         │  MOVABLE ELECTRODE AND WORKPIECE  │        │
         └───────────────┬──────────────────┘        │
                         │            S3              │
          NO      ◇────────────────◇                 │  FIRST
    ┌────────────<     CONTACT?      >                │  PRESSURE
    │             ◇────────────────◇                 │  OPERATION
    │                    │ YES                        │
    │    ┌───────────────▼──────────────────┐         │
    │    │  STOP OPERATION OF               │ ─S4     │
    │    │  MOVABLE ELECTRODE               │         │
    │    └───────────────┬──────────────────┘         │
    │                    │                            │
    │    ┌───────────────▼──────────────────┐         │
    │    │  RESTORE                         │ ─S5     │
    │    │  MOVABLE ELECTRODE               │         │
    └────└───────────────┬──────────────────┘         ┘
                         │
         ┌───────────────▼──────────────────┐
         │  CHECK                           │ ─S6
         │  GUN-AXIS POSITION               │
         └───────────────┬──────────────────┘
```

MOVE UP FIXED ELECTRODE — S7-4 / S7-1 LOWER MOVABLE ELECTRODE BY POSITION CONTROL

DETECT CONTACT BETWEEN FIXED ELECTRODE TIP AND WORKPIECE — S7-5 / S7-2 DETECT CONTACT BETWEEN MOVABLE ELECTRODE AND WORKPIECE

S7-3  CONTACT?  NO  —  S7-6  CONTACT?  NO

YES  —  YES

STOP MOVEING UP FIXED ELECTRODE, STOP LOWERING MOVABLE ELECTRODE — S8

SECOND PRESSURE OPERATION

CHECK GUN-AXIS POSITION — S9

CORRECT AND REGISTER TEACH POINT — S10

```
                    ┌──────────┐
                    │   END    │
                    └──────────┘
```

# FIG. 7

## FIG. 8

TORQUE
COMMAND

GUN-AXIS
POSITION

GUN-AXIS
RESTORING
AMOUNT

THRESHOLD
Th1

GUN-AXIS
POSITION

FILTERED
TORQUE COMMAND

25% OF
THRESHOLD
Th1

TIME

EP 2 402 109 A2

# FIG. 9

POSITION/SPEED FEEDBACK

POSITION COMMAND →

| POSITION/SPEED CONTROL | | ROBOT-AXIS MOTOR | | ROBOT-AXIS ENCODER |

TORQUE COMMAND TO ROBOT-AXIS MOTOR

91

SPEED FEEDBACK

ESTIMATED DISTURBANCE TORQUE

92

JOINT COORDINATE SYSTEM (S-AXIS TO T-AXIS)

93

94

95

TOOL COORDINATE SYSTEM

# FIG. 10

EP 2 402 109 A2

## FIG. 11

Z-AXIS OF TOOL COORDINATE SYSTEM
WHEN T-AXIS IS AT ORIGIN POINT

B-AXIS

R-AXIS

T-AXIS

Z

U-AXIS

$\tau$obs[B]

Fobs_tool[B]

$\theta$t

Y

L-AXIS

Tz

X

S-AXIS

EP 2 402 109 A2

# FIG.12A

B-AXIS  T-AXIS  2

Tz

# FIG.12B

B-AXIS  T-AXIS  2

Tz

# FIG. 13

TEACH POSITION OF
GUN-AXIS IS CORRECTED?

| DETECTION AMOUNT [mm] | | COMPENSATION AMOUNT [mm] | | CORRECTION AMOUNT [mm] |
|---|---|---|---|---|
| -1.5 | + | 0.5 | = | -1.0 |

YES    NO

## FIG. 14

```
              ┌─────────┐
              │  START  │
              └────┬────┘
                   ▼
        ┌──────────────────────┐
        │   FIRST PRESSURE     │──S11        CORRESPONDING
        │     OPERATION        │             TO S6 IN FIG. 6
        └──────────┬───────────┘
 ┌─────────────────┼────────────────────────────────────────┐
 │                 ▼                                          │
 │      ┌──────────────────────┐                             │
 │      │      ACQUIRE         │──S12                        │
 │      │  GUN-AXIS POSITION   │                             │
 │      └──────────┬───────────┘                             │
 │                 ▼                                          │
 │      ┌──────────────────────┐                             │
 │      │ COMPARE WITH PREVIOUS│──S13                        │
 │      │   GUN-AXIS POSITION  │                             │
 │      └──────────┬───────────┘                             │
 │                 ▼        S14                               │
 │            ◇────────────◇        NO                 S15    │
 │           ◇  DIFFERENCE  ◇──────────────┐    ┌────────────┐│
 │           ◇ IS THRESHOLD ◇              ▼    │    ERROR    ││
 │           ◇   OR SMALLER? ◇        ┌─────────┤ PROCESSING ││
 │            ◇────────────◇          │         └────────────┘│
 │                 │ YES                                      │
 └─────────────────┼──────────────────────────────────────────┘
                   ▼
        ┌──────────────────────┐
        │   SECOND PRESSURE    │──S16        CORRESPONDING
        │     OPERATION        │             TO S9 IN FIG. 6
        └──────────┬───────────┘
 ┌─────────────────┼────────────────────────────────────────┐
 │                 ▼                                          │
 │      ┌──────────────────────┐                             │
 │      │      ACQUIRE         │──S17                        │
 │      │  GUN-AXIS POSITION   │                             │
 │      └──────────┬───────────┘                             │
 │                 ▼                                          │
 │      ┌──────────────────────┐                             │
 │      │  COMPARE WITH TAUGHT │──S18                        │
 │      │   GUN-AXIS POSITION  │                             │
 │      └──────────┬───────────┘                             │
 │                 ▼        S19                               │
 │            ◇────────────◇        NO                 S20    │
 │           ◇  DIFFERENCE  ◇──────────────┐    ┌────────────┐│
 │           ◇ IS THRESHOLD ◇              ▼    │    ERROR    ││
 │           ◇   OR SMALLER? ◇        ┌─────────┤ PROCESSING ││
 │            ◇────────────◇          │         └────────────┘│
 │                 │ YES                                      │
 └─────────────────┼──────────────────────────────────────────┘
                   ▼
        ┌──────────────────────┐
        │ CORRECT AND REGISTER │──S21
        │     TEACH POINT      │
        └──────────┬───────────┘
                   ▼
              ┌─────────┐
              │   END   │
              └─────────┘
```

FIG.15A

FIG.15B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4233584 B